# EUROPÄISCHE PATENTSCHRIFT

(11) **EP 1 265 693 B1**
(45) Veröffentlichungstag und Bekanntmachung des Hinweises auf die Patenterteilung: **20.04.2005**
(21) Anmeldenummer: 01901109.7
(22) Anmeldetag: 30.01.2001
(51) Int. Cl.: B01D 63/06

(54) **MEMBRANMODUL**
MEMBRANE MODULE
MODULE MEMBRANAIRE

(30) Priorität: 08.02.2000 DE 10005436
(43) Veröffentlichungstag der Anmeldung: 18.12.2002
(73) Patentinhaber: Bucher-Guyer AG, 8166 Niederweningen (CH)
(72) Erfinder: HARTMANN, Eduard, CH-5425 Schneisingen (CH)
(74) Vertreter: Patentanwälte Leinweber & Zimmermann
(86) Internationale Anmeldenummer: PCT/CH2001/000071
(87) Internationale Veröffentlichungsnummer: WO 2001/058574

(56) Entgegenhaltungen:
- WO-A-98/19778
- GB-A- 1 498 449
- US-A- 3 294 504
- US-A- 3 505 686
- US-A- 5 626 758

## Beschreibung

Die Erfindung betrifft ein Membranmodul für eine Vorrichtung zum Trennen von Stoffgemischen im Querstromverfahren mit einer Mehrzahl von zur Bildung eines im wesentlichen scheibenförmigen Moduls zumindest abschnittweise eine gemeinsame Achse im wesentlichen spiralförmig umlaufenden Rohrmembranen.

Mit derartigen Membranmodulen arbeitende Querstrom-Trennverfahren werden beispielsweise zum Klären von Fruchtsäften eingesetzt. Dazu wird der ungeklärte Fruchtsaft über eine Zuführleitung in die Rohrmembranen eingeleitet, in deren Verlauf ein Stoffe geringer Teilchengröße (bis zu molekurlarer Grösse) aufweisender Teil des Fruchtsaftes, das sogenannte Permeat, die Wände der Rohrmembranen durchdringt und in einen Permattank gelangt, während ein Feststoffe großer Teilchengröße aufweisender Teil des Fruchtsaftes, das Retentat, über eine Abführleitung aus den Rohrmembranen abgeleitet und einer weiteren Verarbeitung zugeführt wird. Bei einer derartigen Trennung bzw. Klärung des Fruchtsaftes kann eine Verstopfung der als Filter wirkenden Wände der Rohrmembran dadurch vermieden werden, daß sich an den Rohrwänden ablagernde Feststoffe durch den die Rohrmembranen durchströmenden Fruchtsaft gelöst und wieder aus den Rohrmembranen entfernt werden.

Zum Erhalt einer zufriedenstellenden Filterleistung der in den beschriebenen Querstrom-Trennverfahren eingesetzten Membranmodule muß eine vergleichsweise große Filterfläche zur Verfügung gestellt werden. Ferner muß sichergestellt sein, daß die Rohrmembranen einen hinreichend geringen Innendurchmesser aufweisen, um ein zum Erhalt einer zufriedenstellenden Filterleistung erforderliches hinreichend geringes Verhältnis des Innenvolumens der Rohrmembranen zur wirksamen Filterfläche zu erhalten. Dabei kann eine zufriedenstellende Filterleistung nur dann erreicht werden, wenn eine Mehrzahl von Rohrmembranen parallel durchströmt wird. Zum Erhalt eines für den praktischen Einsatz erforderlichen kompakten Aufbaus entsprechender Trennvorrichtungen wird in der WO 98/19778 vorgeschlagen, anstelle von geradlinig verlaufenden Rohrmembranen gekrümmte Rohrmembranen einzusetzen. Bei einer ersten Ausführungsform der in der genannten Schrift beschriebenen Trennvorrichtungen werden Rohrmembranen eingesetzt, die eine gemeinsame Wendelachse wendelförmig umlaufen. Zur Vermeidung von Beschädigungen der Rohrmembranen wird in diesem Zusammenhang vorgeschlagen, die einzelnen die gemeinsame Wendelachse umlaufenden Rohrmembranen zu Bündeln zusammenzufassen, in denen die einzelnen Rohrmembranen seilartig verdrillt sind.

Bei einer weiteren Ausführungsform der in der genannten Schrift beschriebenen Trennvorrichtungen bilden die einzelnen Rohrmembranen Membranmodule der eingangs beschriebenen Art, in denen die einzelnen Rohrmembranen zur Bildung flacher, scheibenförmiger Module eine gemeinsame Achse spiralförmig umlaufen. Derartige Membranmodule können im besonderen dann eingesetzt werden, wenn flach bauende Trennvorrichtungen benötigt werden. Dazu können zum Erhalt einer hinreichenden Filterleistung pro Membranmodul eine Vielzahl von Rohrmembranen parallel zueinander spiralförmig in ein oder mehreren Lagen gewickelt sein.

Bei der Herstellung der zuletzt beschriebenen Membranmodule hat es sich jedoch gezeigt, daß die unter Verwendung herkömmlicher Wickelvorrichtungen erhaltenen Membranmodule in vielen Fällen von der Sollform abweichen, weil die Führung der einzelnen Rohrmembranen in der Wickelvorrichtung mit großen Problemen behaftet ist. Das ist darauf zurückzuführen, daß der Durchmesser der fertigen Membranmodule im Vergleich zu der axialen Länge besonders groß ist, so daß bereits geringe Zug- oder Druckspannungen in Achsrichtung der Module ein Herausspringen einzelner Rohre aus der Wickelebene hervorrufen. Aus diesem Grund ist es bei der Herstellung der eingangs beschriebenen Membranmodule im allgemeinen erforderlich, daß die einzelnen Rohrmembranen von Hand gewickelt werden oder ein besonders großer Regelaufwand betrieben werden muß. Darüber hinaus ist es im allgemeinen auch noch erforderlich, daß während des Wickelvorgangs innerhalb der einzelnen Membranmodule an mehreren Stellen eine radial verlaufende Verklebung zwischen den einzelnen Rohrmembranen vorgenommen wird. Nach Fertigstellung der bekannten Membranmodule der vorstehend beschriebenen Art ist darüber hinaus auch noch eine besonders vorsichtige Handhabung dieser Membranmodule erforderlich, damit die einzelnen Rohrmembranen nicht aus ihrer vorgegebenen Position verschoben werden.

Angesichts der vorstehend erläuterten Probleme im Stand der Technik liegt der Erfindung die Aufgabe zugrunde, ein Membranmodul der eingangs beschriebenen Art bereitzustellen, das ohne besonderen Regelaufwand automatisch hergestellt werden kann und eine zufriedenstellende Formstabilität aufweist.

Erfindungsgemäß wird diese Aufgabe durch eine Weiterbildung der bekannten Membranmodule gelöst, bei der mindestens zwei der Rohrmembranen zumindest im Verlauf eines Teils ihres im wesentlichen spiralförmigen Umlaufs zur Bildung eines Rohrmembranstranges eine gemeinsame Wendelachse wendelförmige umlaufen, vorzugsweise verdrillt sind.

Diese Erfindung geht auf die Erkenntnis zurück, daß durch eine Verdrillung der einzelnen Rohrmembranen eine profilierte Außenkontur der einzelnen Rohrmembranstränge erhalten wird, die bei einer spiralförmigen Wicklung dieser Rohrmembranstränge zu einer Stabilisierung des so erhaltenen Membranmoduls führt, weil die Begrenzungsflächen aufeinanderfolgender Windungen der Rohrmembranstränge des Membranmoduls gewissermaßen formschlüssig aneinanderliegen, wodurch eine erhöhte Stabilität bei in Richtung der Spiralachse wirkenden Beanspruchungen des Moduls erhalten wird. Dadurch kann zum einen verhindert werden, daß die einzelnen Rohrmembranen während des Wickelvorganges selbst aus ihrer Sollposition herausspringen. Weiter kann so verhindert werden, daß es bei Handhabung der Membanmodule zu einem Versatz der einzelnen Rohrstränge bzw. Windungen aus ihrer Sollposition kommt. Zum anderen führt die Verwendung verdrillter Rohrmembranen zur Herstellung von Membranmodulen, bei denen die einzelnen Rohrmembranen eine gemeinsame Achse spiralförmig umlaufen auch noch dazu, daß der entsprechenden Wickelvorrichtung in den meisten Fällen nur noch ein Strang zugeführt werden muß, der in sich bereits eine hinreichende Stabilität aufweist, wodurch der Wickelvorgang vereinfacht wird, so daß dieser Wickelvorgang automatisch mit einem vergleichsweise geringen Regelaufwand durchgeführt werden kann. Dabei kann ohne nennenswerten Stabilitätsverlust die Anzahl der Klebverbindungen zwischen den einzelnen Rohrmembranen und/oder Spiralwindungen verringert werden, wobei u.U. vollständig auf derartige Klebverbindungen verzichtet werden kann oder andersartige Verbindungen zum Einsatz kommen können. Bei der Herstellung erfindungsgemäßer Membranmodule werden die einzelnen Rohrmembranen durch die seilartige Verdrillung automatisch in zwei Lagen gewickelt, so daß bei einer derartigen zweilagigen Wicklung auch auf den bei herkömmlichen Membranmodulen zum Erhalt einer zweilagigen Wicklung erforderlichen inneren Umschlag der einzelnen Rohrmembranen um 180° verzichtet werden kann. Das führt zu einer zusätzlichen Vereinfachung des Wickelvorganges und des apparativen Aufwandes für die Wickelvorrichtung.

Üblicherweise werden in einer Vorrichtung zum Trennen von Stoffgemischen im Querstromverfahren eine Vielzahl von Membranmodulen parallel betrieben, wobei für sämtliche Rohrmembranen nur eine Zuführleitung und eine Abführleitung vorgesehen ist. Bei derartigen Vorrichtungen können den Austausch einzelner Membranmodule erfordernde Wartungsarbeiten deutlich vereinfacht werden, wenn die Rohrmembranen des Moduls die gemeinsame Achse längs eines ersten Abschnittes derart spiralförmig umlaufen, daß sich der Krümmungsradius in Strömungsrichtung des die Rohrmembranen durchströmenden Fluids verringert und längs eines darauf folgenden zweiten Abschnittes die gemeinsame Achse derart spiralförmig umlaufen, daß der Krümmungsradius in der Strömungsrichtung zunimmt. Durch diesen Verlauf der Rohrmembranen wird erreicht, daß das Stoffgemisch in dem Membranmodul zunächst in Richtung auf die gemeinsame Achse strömt und danach wieder von dieser gemeinsamen Achse spiralförmig abgeleitet wird, so daß sowohl die Zuführleitung als auch die Abführleitung außerhalb des Membranmoduls angeordnet werden können. Diese Anordnung der Zuführleitung und Abführleitung ermöglicht nach Lösung der Rohrmembranen, bzw. Rohrmembranstränge den Austausch einzelner Membranmodule ohne Behinderung durch die Zuführleitung und die Abführleitung sogar dann, wenn das auszutauschende Membranmodul in Richtung der gemeinsamen Achse zwischen zwei weiteren Membranmodulen angeordnet ist.

Bei dieser Ausführungsform hat es sich als besonders günstig erwiesen, wenn der erste Abschnitt und der zweite Abschnitt etwa den gleichen Außendurchmesser aufweisen.

Eine weitere Vereinfachung der Herstellung erfindungsgemäßer Membranmodule kann unter gleichzeitiger Sicherstellung einer homogenen Filterwirksamkeit für sämtliche Rohrmembranen erreicht werden, wenn alle Rohrmembranen des Moduls die gleiche Länge aufweisen.

Wie eingangs bereits erläutert, wird mit erfindungsgemäßen Membranmodulen eine besonders hohe Filterleistung erreicht, wenn das Membranmodul eine Vielzahl von Rohrmembranen enthält. Diese Rohrmembranen können in dem erfindungsgemäßen Membranmodul in Form von mindestens zwei zumindest längs eines Teils ihres spiralförmigen Umlaufs parallel verlaufenden Strängen aus jeweils mindestens zwei seilartig verdrillten Rohrmembranen verwirklicht sein. Bei der zuletzt beschriebenen Ausführunsgform der Erfindung wird ein Membranmodul erhalten, in dem sämtliche Rohrmembranen etwa die gleiche Länge aufweisen, wenn die Stränge in einer senkrecht zur gemeinsamen Achse verlaufenden Ebene nebeneinander verlaufen, wobei die radiale Reihenfolge der Stränge zwischen dem ersten Abschnitt und dem zweiten Abschnitt umgekehrt wird oder die Stränge in Richtung der gemeinsamen Achse hintereinander angeordnet sind.

Eine weitere Stabilisierung wird erreicht, wenn das erfindungsgemäße Membranmodul mindestens zwei Stränge aus jeweils mindestens zwei seilartig verdrillten Rohrmembranen aufweist, wobei die Wendelachsen dieser Stränge eine weitere gemeinsame Wendelachse wendelförmig umlaufen. Dabei hat es sich als besonders vorteilhaft erwiesen, wenn das Modul mindestens zwei Stränge aufweist, von denen jeder eine Mehrzahl, vorzugsweise drei, Rohrmembranen umfaßt. Weiter hat es sich im Hinblick auf die gewünschte Stabilität erfindungsgemäßer Membranmodule als günstig erwiesen, wenn die Rohrmembranen mindestens eines Stranges einen Träger aus einem im Vergleich zum Material der Rohrmembranen steiferen Material wendelförmig umlaufen.

Bei Einsatz erfindungsgemäßer Membranmodule kann die Filterwirkung erhöht werden, wenn die Membranen mindestens eines Stranges derart wendelförmig umlaufen, daß sich bei Durchströmung der Membranen eine Dean-Strömung in den Membranen einstellt. Das Auftreten von Dean-Strömungen in Vorrichtungen zur Querstromfiltration ist beispielsweise in der WO 97/05946 beschrieben.

Bei der Herstellung von Rohrmembransträngen aus einer Vielzahl von eine gemeinsame Wendelachse wendelförmig umlaufenden Rohrmembran ergibt sich das Problem, dass die einzelnen Rohrmembranen durch die Verdrillung eine unterschiedliche Änderung ihrer Länge längs der gemeinsamen Wendelachse erfahren. Dadurch wird ein Versatz der Stirnflächen der einzelnen Rohrmembranen der einzelnen Rohrmembranstränge längs der gemeinsamen Wendelachse erzeugt. Dieser Versatz kann verringert bzw. beseitigt werden, wenn zur Herstellung erfindungsgemäßer Membranmodule eine Membranwendeleinheit mit mindestens drei Rohrmembransträngen eingesetzt wird, von denen jeder eine Mehrzahl, vorzugsweise drei, eine gemeinsame Wendelachse wendelförmig umlaufenden Rohrmembranen aufweist, wobei die Wendelachsen der einzelnen Stränge eine weitere gemeinsame Wendelachse wendelförmig umlaufen. In weiterer Ausgestaltung der Erfindung ist es auch möglich, dass die Membranwendeleinheit 3ⁿ Rohrmembranstränge aufweist, von denen jeder eine Mehrzahl, vorzugsweise drei, eine gemeinsame Wendelachse wendelförmig umlaufender Rohrmembranen aufweist, wobei die einzelnen Rohrmembranstränge zu 3 Gruppen aus jeweils 3ⁿ⁻¹ Rohrmembransträngen zusammengefasst sind, die eine Hauptwendelachse wendelförmig umlaufen. Dabei kann jede Gruppe von Rohrmembransträngen wiederum drei Untergruppen aus jeweils 3ⁿ⁻² Rohrmembransträngen aufweisen, die eine gemeinsame Nebenwendelachse wendelförmig umlaufen.

Bei erfindungsgemäßen Membranmodulen bzw. Membranwendeleinheiten beträgt die axiale Länge der einzelnen Rohrmembranen für einen wendelförmigen Umlauf um die Wendelachse (Umschlag-Periode) vorzugsweise höchstens das 10-fache des Außendurchmessers der Rohrmembran. Es hat sich gezeigt, dass die Trennvorrichtung bei dieser Ausgestaltung der Erfindung besonders effektiv arbeitet.

Weiter hat es sich als zweckmäßig erwiesen, wenn der Krümmungsradius der gemeinsamen Wendelachse im Verlauf des spiralförmigen Umlaufes mindestens gleich dem 10-fachen des Innendurchmessers der einzelnen Rohrmembranen ist. Auch hier gilt, dass diese Ausgestaltung besonders effektiv arbeitet. Im Hinblick auf die Gesamteffektivität einer unter Verwendung erfindungsgemäßer Membranmodule hergestellten Trennvorrichtung hat es sich als besonders günstig erwiesen, wenn die Länge einer einzelnen Rohrmembran mindestens 3000 x deren Innendurchmesser ist.

Erfindungsgemäß bevorzugt ist die Gesamtzahl der einzelnen Membranen in einem Modul größer als 15. Die Einhaltung dieser Bemessungsregel führt zu einer besonders effektiven Trennvorrichtung.
Eine Zusätzliche Stabilisierung erfindungsgemäßer Membranmodule kann erreicht werden, wenn diese zumindest abschnittweise von einem rahmenförmigen Halter umgeben sind. Ein derartiger Halter gibt der genannten Anordnung nicht nur eine hohe Stabilität, sondern trägt auch dazu bei, dass vorgegebene und im Hinblick auf die Effektivität der Vorrichtung sinnvolle oder gar erforderliche Abstände zwischen den einzelnen Rohrmembranen und/oder Membranmodulen eingehalten werden. Eine weitere Stabilitätserhöhung kann erhalten werden, wenn mindestens zwei der Membranen eines Membranmoduls fest miteinander verbunden sind. Dadurch wird nicht nur eine höhere Stabilität erreicht, sondern auch ein vorgegebener Abstand zwischen den einzelnen Rohrmembranen festgelegt.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, näher erläutert. In der Zeichnung zeigt:
- Fig. 1: eine schematische Draufsicht von oben auf eine mit insgesamt sieben erfindungsgemäßen Membranmodulen ausgestattete Trennvorrichtung,
- Fig. 2: eine Ansicht der Trennvorrichtung gemäß Fig. 1 von vorne,
- Fig. 3: eine schematische Darstellung eines der Membranmodule der Trennvorrichtung nach Fig. 1,
- Fig. 4: eine Detaildarstellung eines Rohrmembranstranges des in Fig. 3 dargestellten Membranmoduls,
- Fig. 5 bis 9: Schnittdarstellungen verschiedener Ausführungsformen erfindungsgemäßer Rohrmembran-Stränge,
- Fig. 10: eine schematische Darstellung eines Membranmoduls gemäß einer weiteren Ausführungsform der Erfindung,
- Fig. 11: eine Schnittdarstellung einer erfindungsgemäßen Membranwendeleinheit,
- Fig. 12: eine Schnittdarstellung einer Membranwendeleinheit gemäß einer weiteren Ausführungsform der Erfindung.

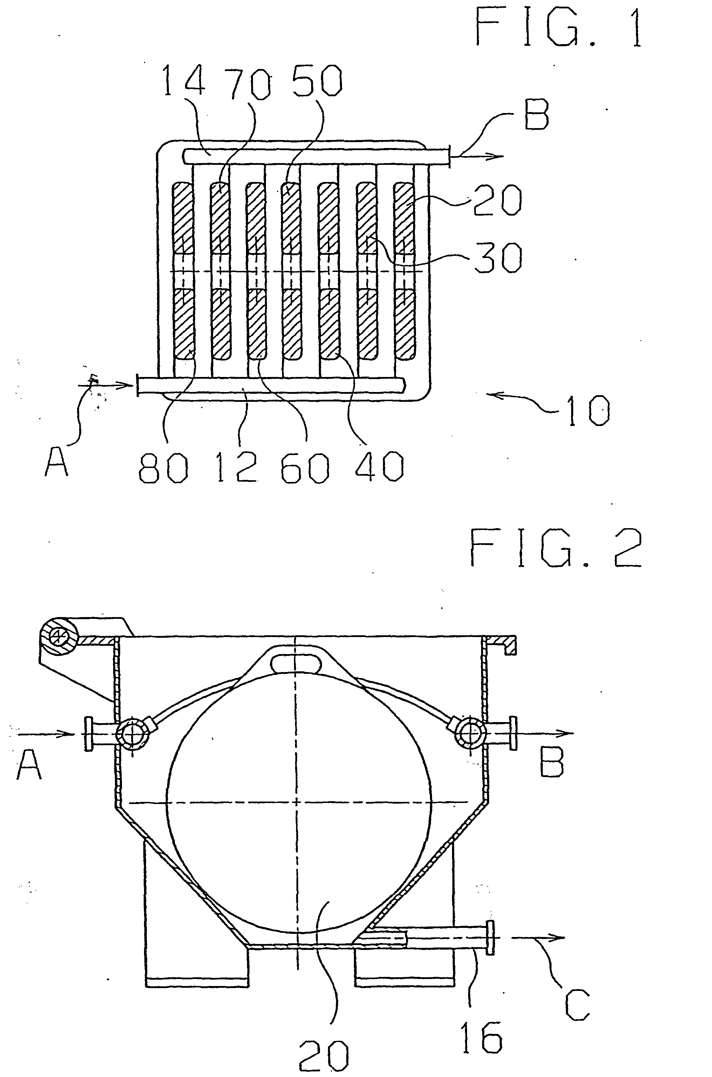

Die in den Fig. 1 und 2 dargestellte Trennvorrichtung besteht im wesentlichen aus einem Sammelbehälter 10 und insgesamt sieben Membranmodulen 20, 30, 40, 50, 60, 70 und 80. Jedes dieser Membranmodule 20 bis 80 ist in Form einer flachen Scheibe gebildet. Ein mit Hilfe der Membranmodule zu trennendes Stoffgemisch wird mit einer Zuführleitung 12 zugeführt, an die die einzelnen Membranmodule 20 bis 80 angeschlossen sind. Nach Durchlaufen der Membranmodule wird der nicht abgetrennte Teil des Stoffgemisches (das Retentat) mit einer Abführleitung 14 abgeführt, wie in den Fig. 1 und 2 durch die Pfeile A und B dargestellt. Der mit den Membranmodulen 20 bis 80 abgetrennte Teil des Stoffgemisches (das Permeat) wird in dem Behälter 10 gesammelt und über eine weitere Abführleitung 16 aus dem Behälter abgezogen, wie in Fig. 2 durch den Pfeil C angedeutet.

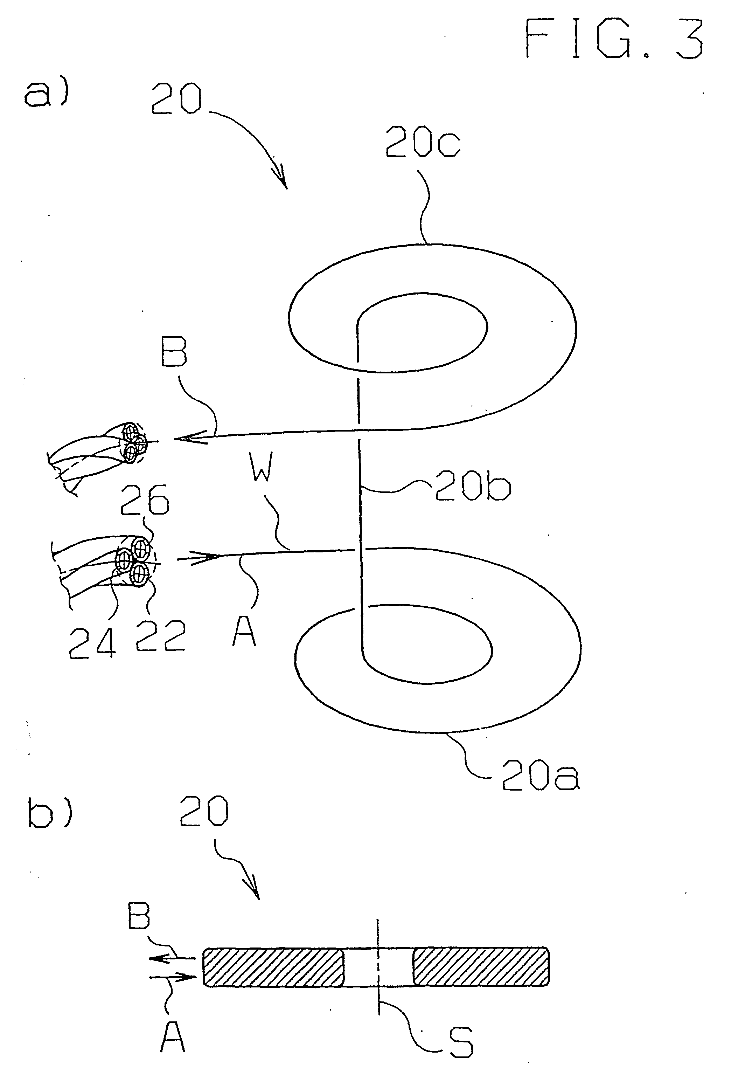

Der Aufbau der einzelnen Membranmodule der in den Fig. 1 und 2 dargestellten Trennvorrichtung wird im folgenden anhand der Fig. 3 beispielhaft für das Membranmodul 20 erläutert. Danach umfaßt das Membranmodul 20 einen Strang aus ingesamt drei Rohrmembranen 22, 24, 26, die eine gemeinsame Wendelachse W wendelförmig umlaufen. Diese gemeinsame Wendelachse W weist einen ersten eine Spiralachse S (vgl. Fig. 3b) spiralförmig umlaufenden Abschnitt 20a auf, in dem sich der Krümmungsradius der Wendelachse in Strömungsrichtung A des die Rohrmembranen 22, 24 und 26 durchströmenden Stoffgemisches stetig verringert, so daß das Stoffgemisch längs dieses ersten spiralförmig umlaufenden Abschnittes 20a in Richtung auf die gemeinsame Achse S strömt. Im Anschluß an den ersten spiralförmig umlaufenden Abschnitt 20a geht die Wendelachse im gleichen Drehsinn in einen zweiten spiralförmig umlaufenden Abschnitt 20c über. Der Abschnitt 20b ist in der Zeichnung zur besseen Erklärung vertikal auseinandergezogen. In der Praxis geht die Spirale schräg ansteigend in die zweite Ebene über. Längs dieses zweiten spiralförmigen Abschnittes 20c nimmt der Krümmungsradius der Wendelachse W in Strömungsrichtung des die Rohrmembranen 22, 24 und 26 durchströmenden Stoffgemisches stetig zu, so daß das Stoffgemisch längs dieses zweiten Abschnittes bezüglich der Achse S radial nach außen strömt und mit Hilfe einer radial außerhalb der spiralförmig umlaufenden Abschnitte 20a und 20c angeordneten Abführleitung abgeleitet werden kann.

Auf diese Weise wird insgesamt die in Fig. 3b schematisch dargestellte Anordnung des Membranmoduls in Form einer flachen Scheibe ermöglicht, wobei sowohl die Zuführleitung als auch die Abführleitung außerhalb der flachen Scheibe angeordnet werden kann, wie in den Fig. 1 und 2 dargestellt.

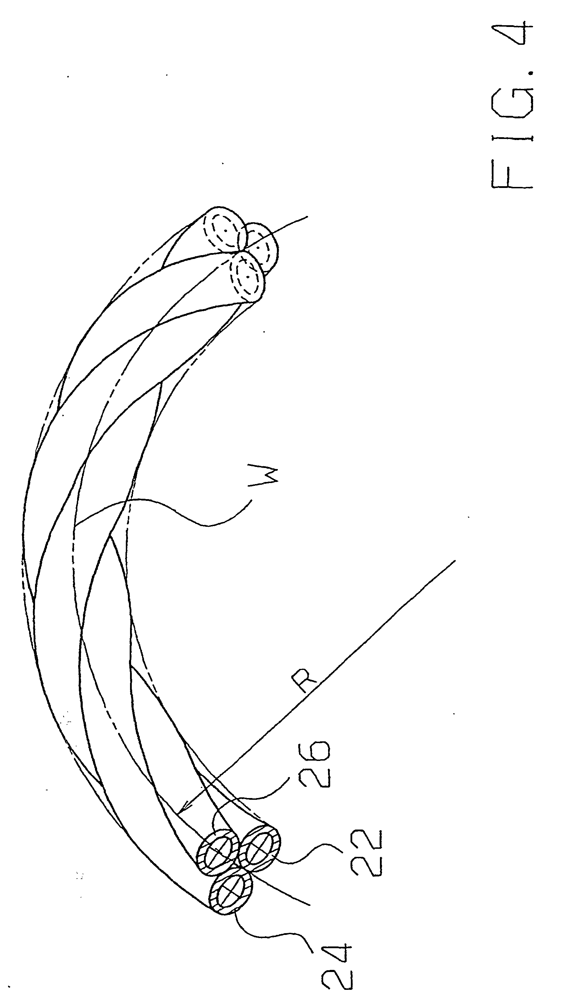

Nach der in Fig. 4 dargestellten Detailansicht des in Fig. 3 gezeigten Rohrmembranstranges sind die drei Rohrmembranen 22, 24 und 26 seilartig miteinander verdrillt, so daß sie eine gemeinsame Wendelachse W wendelförmig umlaufen. Dabei ist diese Wendelachse entsprechend dem spiralförmigen Umlauf längs der Abschnitte 20a und 20c gekrümmt, wobei der Krümmungsradius R längs des spiralförmigen Abschnittes 20a stetig abnimmt und längs des spiralförmigen Abschnittes 20c stetig zunimmt. Bei der in Fig. 4 dargestellten Ausführungsform der Erfindung ist ferner sichergestellt, daß die Längsachsen der einzelnen Rohrmembranen 22, 24 und 26 denselben Abstand von der Wendelachse W aufweisen.

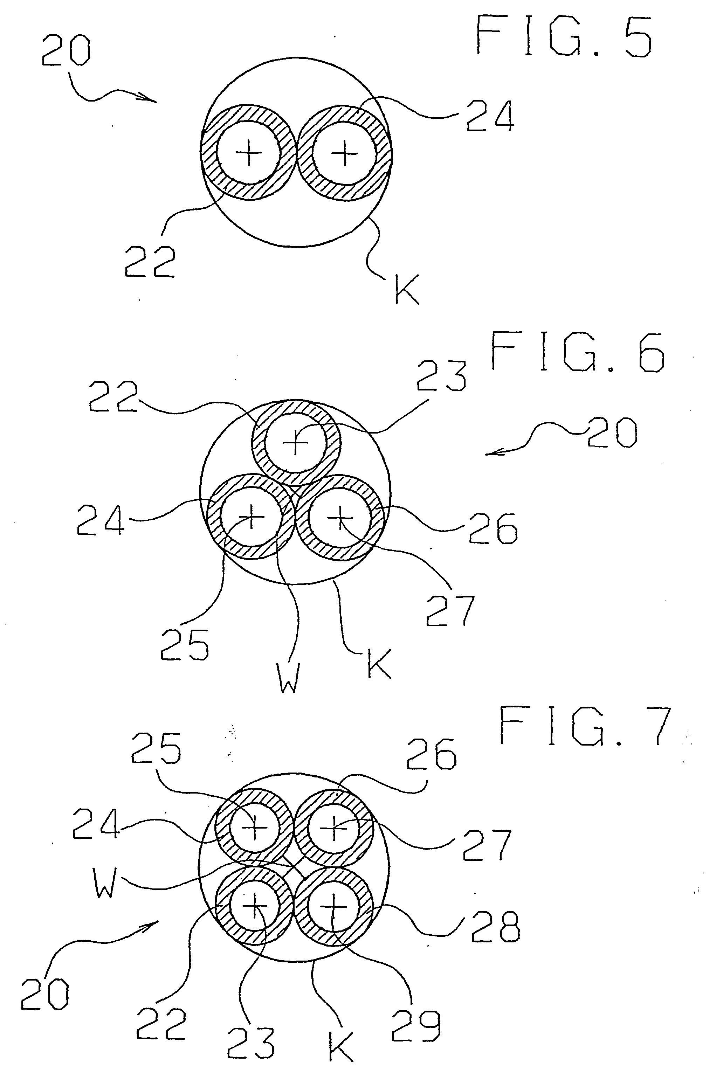

Bei der in Fig. 5 dargestellten Ausführungsform der Erfindung sind nur zwei Rohrmembranen 22 und 24 zur Bildung eines Rohrmembranstranges 20 verdrillt. Die Einhüllende des Rohrmembranstranges ist in Fig. 5 durch den Kreis K angedeutet.

Der in Fig. 6 dargestellte Rohrmembranstrang entspricht dem anhand der Fig. 4 erläuterten Rohrmembranstrang, wobei auch in dieser Zeichnung die Einhüllende des Rohrmembranstranges durch den Kreis K angedeutet ist. Ferner ist in Fig. 6 besonders deutlich erkennbar, daß die Längsachsen 23, 25 und 27 in einer senkrecht zur Wendelachse W verlaufenden Schnittebene denselben Abstand von der Wendelachse W aufweisen.

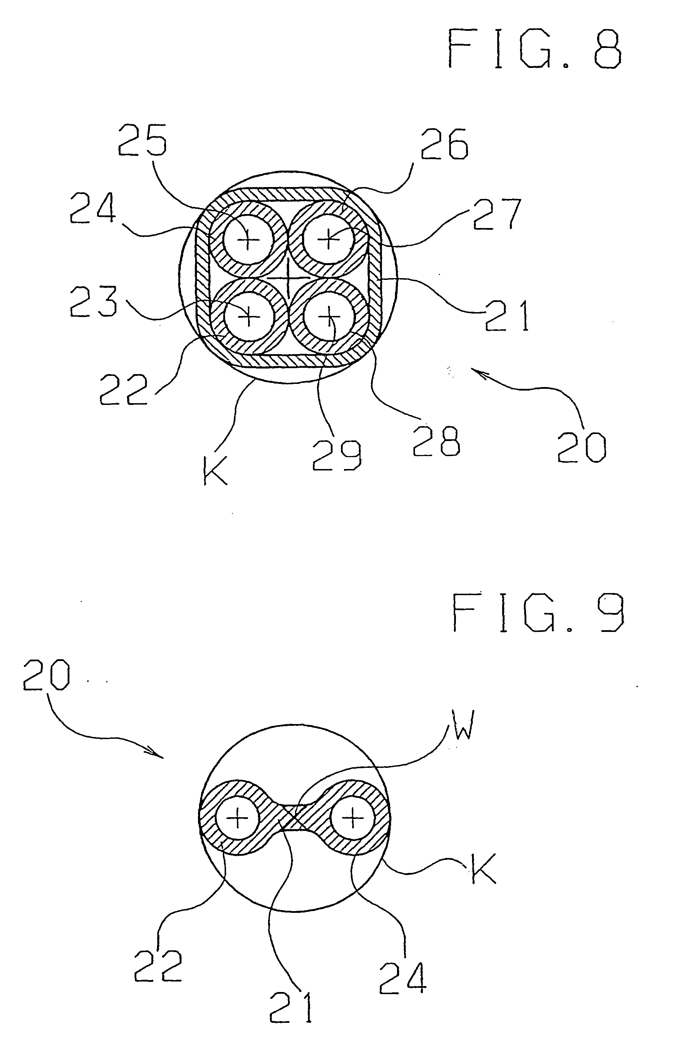

Die in Fig. 7 dargestellte Ausführungsform der Erfindung umfaßt vier eine gemeinsame Wendelachse W wendelförmig umlaufende Rohrmembranen 22, 24, 26 und 28, wobei die Einhüllende des aus diesen Rohrmembranen gebildeten Rohrmembranstranges auch hier durch einen Kreis K angedeutet ist. Auch bei dieser Ausführungsform der Erfindung weisen die Längsachsen 23, 25, 27 und 29 der Rohrmembranen 22, 24, 26 und 28 in einer senkrecht zur Wendelachse W verlaufenden Schnittebene denselben Abstand von der Wendelachse W auf.

Die in Fig. 8 dargestellte Ausführungsform der Erfindung entspricht im wesentlichen der in Fig. 7 dargestellten Ausführungsform, wobei zusätzlich ein Halter 21 vorgesehen ist, mit dem die Rohrmembranen 22, 24, 26 und 28 zusammengehalten werden. Dieser rahmenförmige Halter 21 dient gleichzeitig als Stabilisierungseinrichtung und Abstandshalter zur Sicherstellung eines vorgegebenen Abstandes zwischen den einzelnen Windungen des spiralförmig umlaufenden Rohrmembranstranges.

Fig. 9 zeigt eine weitere Ausführungsform der Erfindung, bei der zwei Rohrmembranen zur Bildung eines Rohrmembranstranges wendelförmig verdrillt sind. Bei dieser Ausführungsform der Erfindung erfolgt eine Stabilisierung mit Hilfe eines die beiden Rohrmembranen 22 und 24 miteinander verbindenden Stegs 21. Dieser Steg 21 kreuzt die Wendelachse W des Rohrmembranstranges und kann einstückig mit den beiden Rohrmembranen 22 und 24 ausgeführt sein.

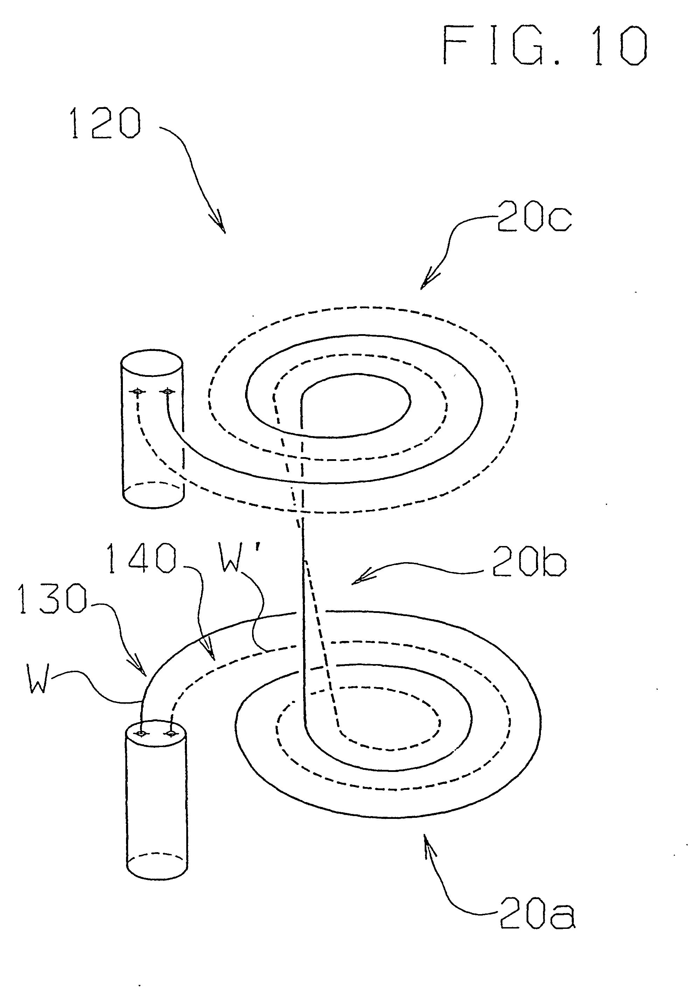

Fig. 10 zeigt ein erfindungsgemäßes Membranmodul 120 mit zwei Rohrmembransträngen 130 und 140. Bei jedem dieser Rohrmembranstränge 130 und 140 verläuft die Wendelachse W bzw. W' entsprechend der anhand der Fig. 3 erläuterten Ausführungsform der Erfindung längs eines ersten spiralförmig umlaufenden Abschnitts 20a, eines Umlenkabschnittes 20b und eines zweiten spiralförmig umlaufenden Abschnittes 20c, wobei die Stränge 130 und 140 in einer senkrecht zu der Spiralachse verlaufenden Ebene nebeneinander angeordnet sind und die radiale Reihenfolge der Stränge 130 und 140 zwischen dem ersten Abschnitt und dem zweiten Abschnitt umgekehrt wird.

Insbesondere mit der anhand der Fig. 10 erläuterten Ausführungsform der Erfindung ist es möglich, scheibenartige Wicklungen von Rohrmembranen mit großem Außendurchmesser und großer Membranfläche zu erstellen. Dies ist ein besonderer Vorteil beim Bau von vertikalen Filteranlagen mit großen Filterflächen. Dabei ist es das Ziel, das Verhältnis der Gesamthöhe zum Durchmesser mehrerer übereinander angeordneter Membranmodule möglichst in Richtung 1 zu optimieren, da die zur Verfügung stehende Gesamthöhe (Hallenhöhe) in vielen Anwendungsbetrieben gering ist. Dazu können beispielsweise Membranmodule mit folgenden Abmessungen eingesetzt werden:

| | |
|---|---|
| Rohrmembran-Innendurchmesser | 5,5 mm |
| Rohrmembran-Außendurchmesser | 8,5 mm |
| Anzahl verseilter Rohre pro Strang | 3 Stück |
| Anzahl spiralförmig gewickelter Lagen pro Scheibe | 2 |
| Scheibendicke mit Fixierung | 39 mm |
| Innendurchmesser der Scheibe | 250 mm |
| Einzelrohrlänge | 30 m |

Dabei bezeichnet der Innendurchmesser den Durchmesser einer zentralen Ausnehmung in dem Modul.

Mit diesen Abmessungen können Module hergestellt werden, die eine Mehrzahl von nebeneinander gewickelten Rohrmembransträngen aufweisen. Dabei kann eine Filteranordnung mit einer Gesamtfilterfläche von etwa 220 m² wie folgt hergestellt werden:

| Filteranlage mit 220 m² Filterfläche aus übereinandergelegten spiralartig gewickelten Scheiben | 1 Strang mit 3 Rohren verseilt | 2 Stränge mit je 3 Rohren verseilt | 4 Stränge mit je 3 Rohren verseilt |
|---|---|---|---|
| Fläche pro Wicklung in m² | 1,62 | 3,11 | 4,67 |
| Aussendurchmesser in mm | 635 | 870 | 1055 |
| Anzahl übereinander angeordneter Module | 135 | 70 | 47 |
| Gesamte Bauhöhe mm | 5296 | 2730 | 1837 |

Abschließend sind noch die weiteren Vorteile erfindungsgemäßer Membranmodule zu nennen:
- Der Permeatabfluß zwischen den einzelnen Wickellagen ist erleichtert.
- Die Wirksamkeit eines zwischenzeitlichen Permeat-Gegendruckes für den Abbau der Deckschichten an der Membranoberfläche ist verbessert.
- Die chemische Reinigung der Außenseite der Membranrohre ist erleichtert.

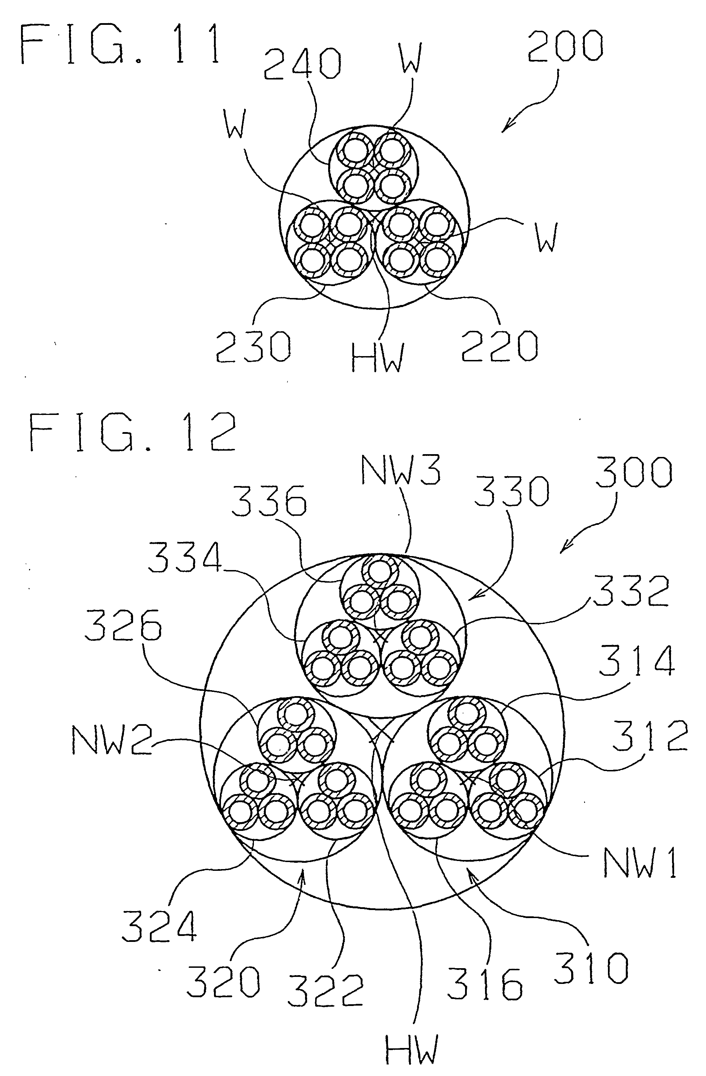

Die in Fig. 11 dargestellte Membranwendeleinheit 200 umfaßt insgesamt 12 Rohrmembranen, die zu drei Gruppen 220, 230 und 240 mit jeweils vier Rohrmembranen zusammengefaßt sind. Die Rohrmembranen jeder der Gruppen 220, 230 und 240 umlaufen wendelförmig jeweils eine Wendelachse W, wobei die Abstände zwischen den Längsachsen der Rohrmembranen jeder Gruppe und der entsprechenden Wendelachse W in einer senkrecht zu der Wendelachse verlaufenden Schnittebene gleich sind. Die Wendelachsen W der durch die Gruppen 220, 230 und 240 gebildeten Rohrmembranstränge umlaufen wendelförmig eine Hauptwendelachse HW, wobei alle Wendelachsen W in einer senkrecht zu der Hauptwendelachse HW verlaufenden Schnittebene denselben Abstand von der Hauptwendelachse HW aufweisen. Durch diese Anordnung der einzelnen Rohrmembranen wird sichergestellt, daß durch die Verdrillung bezüglich den Wendelachsen W bzw. der Hauptwendelachse HW für alle Rohrmembranen dieselbe Verkürzung in einer durch die Hauptwendelachse HW vorgegebenen Richtung erfolgt, so daß kein axialer Versatz zwischen den Stirnflächen der einzelnen Rohrmembranen entsteht.

Eine weitere Ausführungsform der Erfindung, bei der dieser axiale Versatz verhindert ist, ist in Fig. 12 dargestellt. Die in dieser Zeichnung dargestellte Membranwendeleinheit weist insgesamt neun Rohrmembranstränge auf, von denen jeder aus drei eine gemeinsame Wendelachse umlaufenden Rohrmembranen besteht.

Diese neun Rohrmembranstränge sind zu drei Gruppen 310, 320 und 330 zusammengefaßt, von denen jede drei Rohrmembranstränge aufweist. Dabei umlaufen die Wendelachsen der Rohrmembranstränge 312, 314 und 316 der ersten Gruppe 310 eine erste Nebenwendelachse NW1 die Rohrmembranstränge 322, 324, 326 der zweiten Gruppe 320 eine zweite Nebenwendelachse NW2 und die Rohrmembranstränge 332, 334, 336 der dritten Gruppe 330 eine dritte Nebenwendelachse NW3. Dabei ist sichergestellt, daß die Einhüllenden der Rohrmembranstränge jeder Gruppe aneinander anliegen so daß alle Wendelachsen der Rohrmembranstränge jeder Gruppe denselben Abstand von der entsprechenden Nebenwendelachse aufweisen. Die Nebenwendelachsen NW1, NW2 und NW3 umlaufen wendelförmig eine Hauptwendelachse HW. Dabei ist auch hier sichergestellt, daß die Einhüllenden der einzelnen Gruppen von Rohrmembransträngen aneinander anliegen, so daß alle Nebenwendelachsen NW1, NW2 und NW3 denselben Abstand von der Hauptwendelachse HW aufweisen.

Die anhand der Fig. 12 dargestellte Anordnung von Rohrmembranen kann dadurch weitergeführt werden, daß drei Anordnungen der in Fig. 12 dargestellten Art derart zusammengefaßt werden, daß deren Hauptwendelachsen eine weitere Wendelachse umlaufen, so daß das so erhaltene Membranmodul insgesamt 27 Rohrmembranstränge umfaßt, von denen jeder drei Rohrmembranen aufweist. Auf diese Weise können weiter Anordnungen mit 3ⁿ Rohrmembransträngen zusammengestellt werden, von denen jeder eine Mehrzahl, vorzugsweise drei, eine gemeinsame Wendelachse wendelförmig umlaufende Rohrmembranen aufweist, wobei die einzelnen Rohrmembranstränge zu drei Gruppen aus jeweils 3ⁿ⁻¹ Rohrmembranen zusammengefaßt sind, die eine Hauptwendelachse wendelförmig umlaufen wobei wiederum jede dieser Gruppen 3ⁿ⁻² Rohrmembranstränge aufweisen kann, die eine gemeinsame Nebenwendelachse wendelförmig umlaufen, wobei wiederum jede dieser Untergruppen 3ⁿ⁻³ Rohrmembranstränge aufweisen kann, die eine gemeinsame Unterwendelachse wendelförmig umlaufen usw., wobei durch n eine natürliche Zahl bezeichnet wird.

## Patentansprüche

1. Membranmodul für eine Vorrichtung zum Trennen von Stoffgemischen im Querstromverfahren mit einer Anzahl von zur Bildung eines im wesentlichen scheibenförmigen Moduls (20, 120) zumindest abschnittweise eine gemeinsame Achse (S) im wesentlichen spiralförmig umlaufenden Rohrmembranen (22, 24, 26, 28), **dadurch gekennzeichnet, dass** mindestens zwei der Rohrmembranen (22, 24, 26, 28) zumindest im Verlauf eines Teils ihres im wesentlichen spiralförmigen Umlaufs zur Bildung eines Rohrmembranstranges eine gemeinsame Wendelachse wendelförrnig umlaufen, vorzugsweise seilartig verdrillt sind.

2. Membranmodul nach Anspruch 1, **dadurch gekennzeichnet, dass** die Rohrmembranen (22, 24, 26) des Moduls (20) die gemeinsame Achse (S) längs eines ersten Abschnittes (20a) derartig spiralförmig umlaufen, dass sich der Krümmungsradius in Strömungsrichtung des die Rohrmembranen (22, 24, 26) durchströmenden Fluids verringert und längs eines darauffolgenden zweiten Abschnittes (20c) die gemeinsame Achse (S) derart spiralförmig umlaufen, dass der Krümmungsradius (R) in der Strömungsrichtung zunimmt.

3. Membranmodul nach Anspruch 2, **dadurch gekennzeichnet, dass** der erste Abschnitt (20a) und der zweite Abschnitt (20c) etwa den gleichen Außendurchmesser aufweisen.

4. Membranmodul nach einem der vorhergehenden Ansprüche, **dadurch gekennzeichnet, dass** alle Rohrmembranen (22, 24, 26, 28) des Moduls die gleiche Länge aufweisen.

5. Membranmodul nach einem der vorhergehenden Ansprüche, **dadurch gekennzeichnet, dass** das Modul mindestens zwei zumindest längs eines Teils ihres spiralförmigen, Umlaufs parallel verlaufende Stränge (130, 140) aus jeweils mindestens zwei seilartig verdrillten Rohrmembranen aufweist.

6. Membranmodul nach den Ansprüchen 2 und 5, **dadurch gekennzeichnet, dass** die Stränge (130, 140) in einer senkrecht zur gemeinsamen Achse verlaufenden Ebene nebeneinander verlaufen, wobei die radiale Reihenfolge der Stränge zwischen dem ersten Abschnitt (20a) und dem zweiten Abschnitt (20c) umgekehrt wird.

7. Membranmodul nach Anspruch 5, **dadurch gekennzeichnet, dass** die Stränge in Richtung der gemeinsamen Achse hintereinander angeordnet sind.

8. Membranmodul nach einem der vorhergehenden Ansprüche, **dadurch gekennzeichnet, dass** das Modul mindestens zwei Stränge aus jeweils mindestens zwei seilartig verdrillten Rohrmembranen aufweist, wobei die Wendelachsen der Stränge eine weitere gemeinsame Wendelachse wendelförmig umlaufen.

9. Membranmodul nach Anspruch 8, **dadurch gekennzeichnet, dass** das Modul mindestens drei Stränge aufweist, von denen jeder eine Mehrzahl, vorzugsweise drei, Rohrmembranen umfasst.

10. Membranmodul nach einem der vorhergehenden Ansprüche, **dadurch gekennzeichnet, dass** die Rohrmembranen mindestens eines Strangs einen Träger aus einem im Vergleich zum Material der Rohrmembranen steiferen Material wendelförmig umlaufen.

11. Membranmodul nach Anspruch 9 mit 3ⁿ Rohrmembransträngen, von denen jeder eine Mehrzahl, vorzugsweise drei, eine gemeinsame Wendelachse wendelförmig umlaufende Rohrmembranen aufweist, wobei die einzelnen Rohrmembranstränge zu 3 Gruppen aus jeweils 3ⁿ⁻¹ Rohrmembransträngen zusammengefasst sind, die eine Hauptwendelachse wendelförmig umlaufen, und n eine natürliche Zahl größer oder gleich 2 darstellt.

12. Membranmodul nach Anspruch 11, **dadurch gekennzeichnet, dass** jede Gruppe drei Untergruppen aus jeweils 3ⁿ⁻² Rohrmembransträngen aufweist, die eine gemeinsame Nebenwendelachse wendelförmig umlaufen.

## Claims

1. Membrane module for a device for separating mixtures by cross-flow filtration, comprising a plurality of tubular membranes (22, 24, 26, 28) extending substantially spirally at least in some portions around a common axis (S) in order to form a substantially disc-shaped module (20, 120), **characterised in that** at least two of the tubular membranes (22, 24, 26, 28) extend helically around a common helix axis, preferably twisted like a cable, at least over part of their substantially spiral course in order to form a tubular membrane strand.

2. Membrane module according to claim 1, **characterised in that** the tubular membranes (22, 24, 26) of the module (20) extend spirally around the common axis (S) along a first portion (20a) in such a manner that the radius of curvature decreases in the flow direction of the fluid flowing through the tubular membranes (22, 24, 26) and extend spirally around the common axis (S) along a subsequent second portion (20c) in such a manner that the radius of curvature (R) increases in the flow direction.

3. Membrane module according to claim 2, **characterised in that** the first portion (20a) and the second portion (20c) have approximately the same outer diameter.

4. Membrane module according to one of the preceding claims, **characterised in that** all of the tubular membranes (22, 24, 26, 28) of the module have the same length.

5. Membrane module according to one of the preceding claims, **characterised in that** the module has at least two strands (130, 140) extending in parallel at least along part of their spiral course, each consisting of at least two tubular membranes twisted like a cable.

6. Membrane module according to claims 2 and 5, **characterised in that** the strands (130, 140) extend alongside one another in a plane extending perpendicularly to the common axis, the radial sequence of the strands being reversed between the first portion (20a) and the second portion (20c).

7. Membrane module according to claim 5, **characterised in that** the strands are arranged one behind the other in the direction of the common axis.

8. Membrane module according to one of the preceding claims, **characterised in that** the module has at least two strands each consisting of at least two tubular membranes twisted like a cable, the helix axes of the strands extending helically around a further common helix axis.

9. Membrane module according to claim 8, **characterised in that** the module has at least three strands, each of which includes a plurality of, preferably three tubular membranes.

10. Membrane module according to one of the preceding claims, **characterised in that** the tubular membranes of at least one strand extend helically around a carrier consisting of a material which is more rigid than the material of the tubular membranes.

11. Membrane module according to claim 9, comprising 3ⁿ tubular membrane strands, each of which has a plurality of, preferably three tubular membranes extending helically around a common helix axis, the individual tubular membrane strands being combined into 3 groups each consisting of 3ⁿ⁻¹ tubular membrane strands extending helically around a principal helix axis and n being a natural number greater than or equal to 2.

12. Membrane module according to claim 11, **characterised in that** each group has three sub-groups each consisting of 3ⁿ⁻² tubular membrane strands extending helically around a common secondary helix axis.

## Revendications

1. Module membranaire pour un dispositif pour séparer des mélanges de substances par le procédé à flux transversal, avec un certain nombre de membranes tubulaires (22, 24, 26, 28) qui, au moins sur des tronçons, s'étendent essentiellement en spirale autour d'un axe commun (S) afin de former un module (20, 120) essentiellement en forme de disque, **caractérisé en ce qu'**au moins deux des membranes tubulaires (22, 24, 26, 28), au moins sur une partie de leur développement essentiellement en spirale, s'étendent en hélice autour d'un axe d'hélice commun afin de former un toron de membranes tubulaires, de préférence sont torsadées à la manière d'un câble.

2. Module membranaire selon la revendication 1, **caractérisé en ce que** les membranes tubulaires (22, 24, 26) du module (20), le long d'un premier tronçon (20a), s'étendent en spirale autour de l'axe commun (S) de telle sorte que le rayon de courbure diminue dans la direction d'écoulement du fluide s'écoulant à travers les membranes tubulaires (22, 24, 26) et, le long d'un deuxième tronçon consécutif (20c), s'étendent en spirale autour de l'axe commun (S) de telle sorte que le rayon de courbure (R) augmente dans la direction d'écoulement.

3. Module membranaire selon la revendication 2, **caractérisé en ce que** le premier tronçon (20a) et le deuxième tronçon (20c) présentent approximativement le même diamètre extérieur.

4. Module membranaire selon l'une des revendications précédentes, **caractérisé en ce que** les membranes tubulaires (22, 24, 26, 28) du module présentent toutes la même longueur.

5. Module membranaire selon l'une des revendications précédentes, **caractérisé en ce que** le module présente au moins deux torons (130, 140), qui sont constitués chacun d'au moins deux membranes tubulaires torsadées à la manière d'un câble et qui s'étendent en parallèle au moins sur une partie de leur développement en spirale.

6. Module membranaire selon les revendications 2 et 5, **caractérisé en ce que** les torons (130, 140) s'étendent en juxtaposition dans un plan s'étendant perpendiculairement à l'axe commun, sachant que la succession radiale des torons est inversée entre le premier tronçon (20a) et le deuxième tronçon (20c).

7. Module membranaire selon la revendication 5, **caractérisé en ce que** les torons sont disposés en succession dans la direction de l'axe commun.

8. Module membranaire selon l'une des revendications précédentes, **caractérisé en ce que** le module présente au moins deux torons constitués chacun d'au moins deux membranes tubulaires torsadées à la manière d'un câble, sachant que les axes d'hélice des torons s'étendent en hélice autour d'un axe d'hélice commun supplémentaire.

9. Module membranaire selon la revendication 8, **caractérisé en ce que** le module présente au moins trois torons qui comprennent chacun une pluralité de membranes tubulaires, de préférence trois.

10. Module membranaire selon l'une des revendications précédentes, **caractérisé en ce que** les membranes tubulaires d'au moins un toron s'étendent en hélice autour d'un élément porteur constitué d'un matériau plus rigide que le matériau des membranes tubulaires.

11. Module membranaire selon la revendication 9 avec 3ⁿ torons de membranes tubulaires qui présentent chacun une pluralité de membranes tubulaires, de préférence trois, qui s'étendent en hélice autour d'un axe d'hélice commun, sachant que les torons individuels de membranes tubulaires sont regroupés en 3 groupes constitués chacun de 3ⁿ⁻¹ torons de membranes tubulaires qui s'étendent en hélice autour d'un axe d'hélice principale, n étant un entier naturel supérieur ou égal à 2.

12. Module membranaire selon la revendication 11, **caractérisé en ce que** chaque groupe présente trois sous-groupes constitués chacun de 3ⁿ⁻² torons de membranes tubulaires, qui s'étendent en hélice autour d'un axe d'hélice secondaire commun.
